# EUROPÄISCHE PATENTANMELDUNG

(11) **EP 1 719 689 A1**
(43) Veröffentlichungstag der Anmeldung: **08.11.2006**
(21) Anmeldenummer: 06113496.1
(22) Anmeldetag: 04.05.2006
(51) Int. Cl.: B62D 1/187

(54) **Vorrichtung zur gemeinsamen teleskopischen und seitwärts Verstellung eines Lenkrades mit Anzeigeeinrichtung**

(30) Priorität: 06.05.2005 DE 102005021667
(71) Anmelder: Deere & Company, Moline, IL 61265-8098 (US)
(72) Erfinder: Knobloch, Ulrich, 68789, St. Leon-Roth (DE); Höfle, Jens Jörg, 64342, Seeheim-Jugenheim (DE); Crookes, William E., Ann Arbor, MI 48105 (US); Ahrens, Andreas, 70197 Stuttgart (DE)
(74) Vertreter: Bradl, Joachim

(57) **Zusammenfassung**

Die Erfindung betrifft eine Vorrichtung (10) zum Bedienen eines Fahrzeugs, insbesondere eines landwirtschaftlichen oder industriellen Nutzfahrzeugs. Die Vorrichtung (10) umfasst ein Lenkrad (12), eine Lagereinheit und eine Anzeigeeinrichtung (32). Mit der Anzeigeeinrichtung (32) ist mindestens eine aktuelle Fahrzeugzustandsinformation anzeigbar. Das Lenkrad (12) ist in der Lagereinheit drehbar um eine Drehachse (14) gelagert. Das Lenkrad (12) in seiner Position im Wesentlichen in Richtung der Drehachse (14) verstellbar anordenbar. Das Lenkrad (12) ist derart verschwenkbar angeordnet, dass der Winkel zwischen der Drehachse (14) des Lenkrads (12) und der Vertikalen (20) veränderbar ist. Damit insbesondere das Lenkrad (12) zu einer ergonomischen Bedienung des Fahrzeugs einstellbar ist und ein weitgehend problemloses Ablesen der Anzeigeinstrumente der Anzeigeeinrichtung (32) möglich ist, wird vorgeschlagen, die Anzeigeeinrichtung (32) derart anzuordnen, dass bei einem Verstellen der Position des Lenkrads (12) in Richtung seiner Drehachse (14) und/oder bei einem Verschwenken des Lenkrads (12) die Relativposition zwischen Lenkrad (12) und Anzeigeeinrichtung (32) im Wesentlichen gleich bleibt.

## Beschreibung

Die Erfindung betrifft eine Vorrichtung zum Bedienen eines Fahrzeugs. Die Vorrichtung umfasst ein Lenkrad, eine Lagereinheit und eine Anzeigeeinrichtung. Mit der Anzeigeeinrichtung ist mindestens eine aktuelle Fahrzeugzustandsinformation anzeigbar. Das Lenkrad ist in der Lagereinheit drehbar um eine Drehachse gelagert. Das Lenkrad ist in seiner Position im Wesentlichen in Richtung der Drehachse verstellbar anordenbar. Das Lenkrad ist derart verschwenkbar angeordnet, dass der Winkel zwischen der Drehachse des Lenkrads und der Vertikalen veränderbar ist.

Einheiten, mit welchen das Lenkrad verschwenkbar zur Vertikalen und mit welchen das Lenkrad seiner Position im Wesentlichen in Richtung seiner Drehachse verstellbar anordenbar ist, sind aus dem Stand der Technik bekannt. Lediglich beispielhaft wird auf die DE 198 29 238 A1 hingewiesen, wo im Zusammenhang mit einem Insassenschutz beim Crashfall in Fig. 12 eine solche Verstellmöglichkeit des Lenkrads offenbart ist.

Bei dem Fahrzeug könnte es sich um ein landwirtschaftliches oder industrielles Nutzfahrzeug handeln, beispielsweise um einen Traktor, eine Erntemaschine oder einen Mähdrescher.

Vorrichtungen der eingangs genannten Art sind aus dem Stand der Technik bekannt, insbesondere bei Traktoren. Ein Verstellen bzw. Verschwenken des Lenkrads dient hauptsächlich zur individuellen Einstellung eines Bedieners bzw. Fahrers des Fahrzeugs auf seine Größe und Gestalt, so dass das Fahrzeug auch für eine längere Dauer ergonomisch bedient werden kann. Die Anzeigeeinrichtung zeigt üblicherweise Informationen wie Geschwindigkeit, Tankinhalt usw. an und ist in Traktoren ortsfest angeordnet. Traktoren einiger Hersteller weisen eine verschwenkbar angeordnete Anzeigeeinrichtung auf. Die Anzeigeinstrumente und Bedienelemente wie Blinkerhebel, Wischerhebel, Licht oder Warnblinkschalter sind so nur sehr begrenzt auf die Größe und Gestalt des Fahrers einstellbar, so dass eine ergonomische Bedienung des Fahrzeugs einerseits und ein optimales Ablesen der Anzeigeinstrumente der Anzeigeeinrichtung andererseits nur begrenzt möglich ist.

Der vorliegenden Erfindung liegt daher die Aufgabe zugrunde, eine Vorrichtung der eingangs genannten Art anzugeben und weiterzubilden, durch welches die vorgenannten Probleme überwunden werden. Insbesondere soll das Lenkrad zu einer ergonomischen Bedienung des Fahrzeugs einstellbar sein und ein weitgehend problemloses Ablesen der Anzeigeinstrumente der Anzeigeeinrichtung möglich sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Vorrichtung der eingangs genannten Art dadurch gekennzeichnet, dass die Anzeigeeinrichtung derart angeordnet ist, dass bei einem Verstellen der Position des Lenkrads in Richtung seiner Drehachse und/oder bei einem Verschwenken des Lenkrads die Relativposition zwischen Lenkrad und Anzeigeeinrichtung im Wesentlichen gleich bleibt.

Erfindungsgemäß ist zunächst erkannt worden, dass für jeden Bediener des Fahrzeugs eine bezogen auf seine Größe und Gestalt optimale Einstellung der Position des Lenkrads relativ zur Fahrzeugkabine bzw. zum Bedienersitz möglich ist, wenn das Lenkrad teleskopierbar und verschwenkbar positioniert und in der jeweiligen Positionen fixiert werden kann. Somit kann der Bediener das Lenkrad auch bei einem mehrstündigen Betrieb des Fahrzeugs entspannt bedienen. Mit anderen Worten ist das Fahrzeug für den Bediener auf Dauer ergonomisch bedienbar. Da nun in erfindungsgemäßer Weise auch die Anzeigeeinrichtung mit dem Lenkrad in gleicher Weise verstellbar angeordnet ist, kann der Bediener des Fahrzeugs in gleicher Weise die Anzeigeeinrichtung in optimaler Weise einsehen bzw. ablesen, und zwar ohne sich verspannen oder verrenken zu müssen. Somit ist in ganz besonders vorteilhafter Weise sowohl das Lenkrad als auch die von der Anzeigeeinheit zur Verfügung gestellten Informationssysteme optimal auf die Größe und Gestalt des Bedieners einstellbar.

In einer bevorzugten Ausführungsform ist die Anzeigeeinrichtung an oder in einem Gehäuse angeordnet. Das Gehäuse ist mit dem Lenkrad in im Wesentlichen gleicher Weise verstellbar und/oder verschwenkbar angeordnet.

Im Konkreten weist die Lagereinheit eine Lenksäule auf. Mit anderen Worten ist das Lenkrad in der Lenksäule gelagert, wobei die Lenksäule derart ausgebildet ist, dass ein Verschwenken der Lenksäule und somit des Lenkrads zum Verändern des Winkels zwischen der Drehachse des Lenkrads und der Vertikalen möglich ist. Das Lenkrad selbst kann innerhalb der Lenksäule teleskopiert bzw. in seiner Position in Richtung der Drehachse des Lenkrads verstellt werden. Die Anzeigeeinrichtung und/oder das Gehäuse ist an der Lenksäule befestigt. Somit könnte in einer entsprechenden Ausführungsform beim Teleskopieren des Lenkrads und/oder beim Verschwenken des Lenkrads das Lenkrad und die Anzeigeeinrichtung und das Gehäuse gemeinsam in gleicher Weise teleskopiert bzw. verschwenkt werden.

Das Gehäuse könnte mehrteilig - vorzugsweise dreiteilig - ausgebildet sein. Alle Komponenten könnten in dem Gehäuse angeordnet sein. Beispielsweise können elektrische und mechanische Komponenten in dem Gehäuse ausgeordnet sein. Als mechanische Komponenten kommen beispielsweise eine Lenksäule nebst Bauteilen hierzu, ein Lager, eine entsprechende Gelenkwelle, Steckverbinderhalterungen, eine Teleskopiermechanik zum Teleskopieren der Vorrichtung und/oder eine Arretiervorrichtung zum Arretieren der Lenksäule in einer vorgebbaren Position in Frage.

Die elektrischen Komponenten könnten in einem Gehäuseteil zusammengefasst sein, so dass beispielsweise die elektrischen Komponenten in Form eines Moduls ausgebildet sind. Ein solches Modul könnte in einem Störfall als Ganzes schnell und einfach ausgetauscht werden, insbesondere dann, wenn es unmittelbar hinter einem abnehmbaren Gehäuseteil oder einer abnehmbaren Gehäuseblende angeordnet ist.

In einer konkreten Ausführungsform weist das Gehäuse eine Luftleiteinrichtung und/oder mindestens einen Luftauslass auf. Die Luftleiteinrichtung könnte insbesondere mindestens einen Luftschlauch oder mindestens einen rohrförmig ausgebildeten Luftkanal aufweisen. Die Luftleiteinrichtung könnte mit einem an der Gehäuseoberfläche angeordneten Luftauslass verbunden sein. Die Luftleiteinrichtung kann nun derart ausgebildet sein, dass mit ihr Luft von der äußeren Umgebung des Fahrzeugs nach einer gegebenenfalls vorgesehenen Luftfilterung über eine Heizung und/oder über eine Klimaanlage und/oder auf direktem Weg zu einem Luftauslass geleitet werden kann. Zum Aufbau eines Unterdrucks bzw. Überdrucks um eine Luftleitung zu bewirken könnte die Luftleiteinrichtung mindestens einen Ventilator aufweisen. Die Luftleiteinrichtung könnte auch derart ausgebildet sein, dass mit ihr mindestens eine Komponente im Gehäuse kühlbar ist, beispielsweise eine oder mehrere elektronische Komponenten. Über einen Luftauslass könnte Luft einem Bediener zugeführt oder in eine Fahrzeugkabine geleitet werden. Falls das Fahrzeug in Form eines Traktors mit einer Bedienerkabine ausgebildet ist und da das Lenkrad mit dem Gehäuse üblicherweise im vorderen Bereich der Fahrzeugkabine nahe der Windschutzscheibe angeordnet ist, könnten weiterhin Mittel vorgesehen sein, die sicherstellen, dass mit der Luftleiteinrichtung auch dann Luft in Richtung der Windschutzscheibe leitbar ist, wenn das Gehäuse samt Lenkrad in verschiedenen - idealerweise in allen - Verschwenkstellungen angeordnet ist. Somit kann einem Beschlagen der Windschutzscheibe unabhängig von der aktuell vorliegenden Gehäusestellung mit Hilfe der Luftleiteinrichtung entgegengewirkt werden.

Im Konkreten umfasst die Anzeigeeinrichtung mindestens ein Anzeigeinstrument, beispielsweise eine Fahrtgeschwindigkeitsanzeige zum Anzeigen der aktuell vorliegenden Fortbewegungsgeschwindigkeit des Fahrzeugs, eine Drehzahlanzeige zum Anzeigen der aktuell vorliegenden Drehzahl des Verbrennungsmotors des Fahrzeugs oder eine Tankinhaltsanzeige. Die gesamte Anzeigeeinrichtung oder ein Anzeigeinstrument könnte beispielsweise in Form eines LCD-(Liquid-Crystal-Device) oder TFT-Displays (Thin-Film-Transistor) ausgebildet sein und als eine Ausgabeeinheit eines Fahrzeugcomputers betrieben werden. Weiterhin könnte die Anzeigeeinrichtung mindestens ein Kontrollelement und/oder mindestens ein Alarmsingalelement aufweisen, beispielsweise eine Warnleuchte für zu geringen Öldruck.

Das Gehäuse, das auch in Form einer Bedienkonsole ausgebildet sein kann, weist mindestens ein Bedienelement auf. Als ein Bedienelement könnte beispielsweise ein Fahrtrichtungswechselschalter, ein Blinkerhebel, ein Wischerhebel zum Betätigen des Scheibenwischers, einen Licht und/oder einen Warnblinkschalter vorgesehen sein.

Ganz besonders bevorzugt ist die erfindungsgemäße Vorrichtung zum Bedienen eines Fahrzeugs im Sinn einer komplett vormontierten Einheit ausgestaltet. Die vormontierte Einheit weist eine elektrische und/oder eine mechanische Schnittstelle auf. Die Vorrichtung über die elektrische und/oder mechanische Schnittstelle ist mit dem Fahrzeug oder einer Fahrzeugkabine verbindbar. Die mechanische Schnittstelle könnte einen Befestigungsflansch aufweisen, der mittels mindestens einer Schraubverbindung die Lenksäule bzw. die Lagereinheit mit dem Fahrzeugrahmen oder einer Fahrzeugkabine verbindet. Durch eine solche Ausgestaltung ist in besonders vorteilhafter Weise eine schnelle Montage der erfindungsgemäßen Vorrichtung an einem Fahrzeug bei der Produktion des Fahrzeugs möglich. Andererseits ist es auch möglich, die komplette vormontierte Einheit im Störungsfall einfach und in kürzester Zeit auszutauschen, so dass das Fahrzeug unmittelbar nach dem Austausch weiter betrieben werden kann und die Standzeit des Fahrzeugs in einem Störfall in ganz besonders vorteilhafter Weise minimiert wird. Die defekte vormontierte Einheit kann dann in der Werkstatt repariert oder zum Hersteller zur Reparatur zurückgeschickt werden.

Mit der erfindungsgemäßen Vorrichtung zum Bedienen eines Fahrzeugs in seinen beschriebenen vorteilhaften Ausführungsformen ist eine ergonomische Anpassung des Lenkrads, der Bedienelemente und der Anzeigeeinrichtung an die jeweilige Größe und Gestalt des Bedieners anpassbar. Insbesondere ist eine optimale Ausrichtung der Anzeigeinstrumente der Anzeigeeinrichtung auf den Bediener möglich, so dass alle Informationen und Statusanzeigen stets im Blickfeld des Bedieners sind und die Sicht auf die Anzeigeeinrichtung nicht von einer Komponente oder von dem Lenkrad eingeschränkt ist. Sämtliche Bedienelemente beziehungsweise Schalter können aufgrund der immer gleichen Lage bzw. Relativposition zum Lenkrad vom Bediener präzise und sicher genutzt werden. Die Anzeige und Bedienelemente können schnell und leicht ins Blickfeld des Fahrers platziert werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine Seitenansicht eines Ausführungsbeispiels einer erfindungsgemäßen Vorrichtung zum Bedienen eines Fahrzeugs, wobei zwei mögliche Arretierpositionen der Vorrichtung angedeutet sind und
- Fig. 2: eine Seitenansicht des Ausführungsbeispiels aus Figur 1, wobei zwei andere Arretierpositionen der Vorrichtung angedeutet sind.

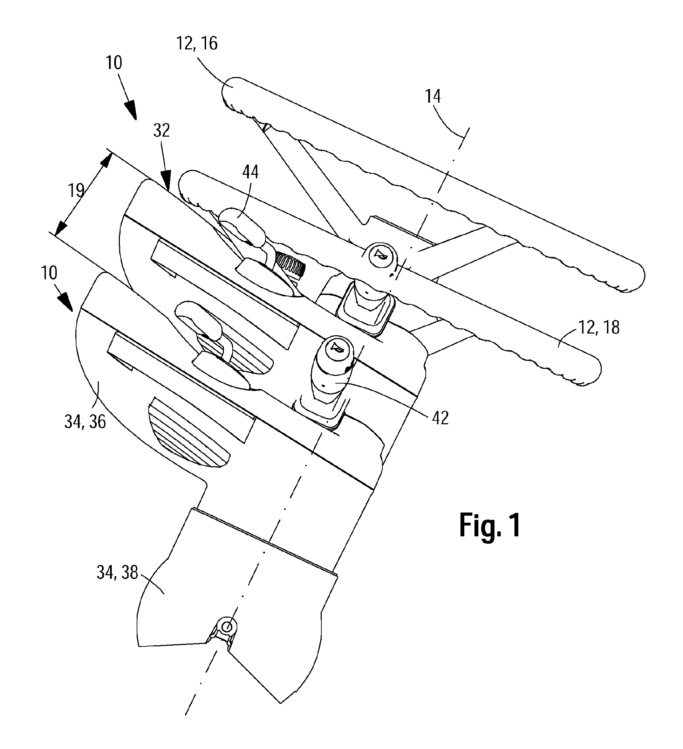

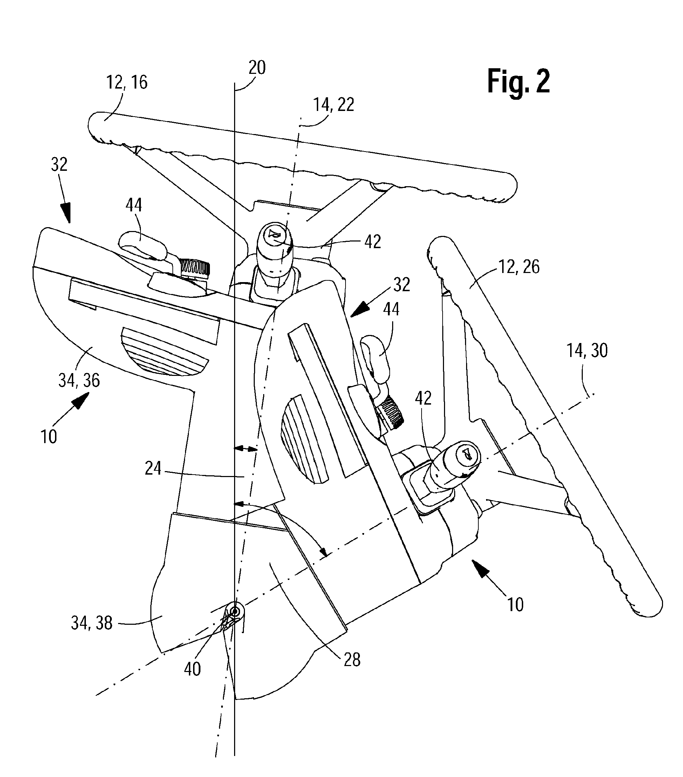

Die Figuren 1 und 2 zeigen ein Ausführungsbeispiel der erfindungsgemäßen Vorrichtung 10 zum Bedienen eines Fahrzeugs. Die Vorrichtung 10 ist in einer - in den Figuren nicht gezeigten - Kabine eines Traktors angeordnet. Die Vorrichtung 10 umfasst ein Lenkrad 12, das um die Drehachse 14 drehbar angeordnet ist. Das Lenkrad 12 ist in einer - in den Figuren 1 und 2 nicht gezeigten - Lagereinheit bzw. Lenksäule drehbar gelagert. Das Lenkrad 12 ist in seiner Position entlang der Richtung der Drehachse 14 verstellbar anordenbar und kann in der jeweiligen Position arretiert werden. Dies ist lediglich schematisch in Figur 1 angedeutet. Dort ist das Lenkrad 12 einerseits in einer oberen Position 16 und andererseits in einer unteren Position 18 gezeigt. Die Länge des Verstellwegs des Lenkrads 12 ist in Figur 1 mit dem Doppelpfeil 19 angedeutet.

Das Lenkrad 12 ist auch derart verschwenkbar angeordnet, dass der Winkel zwischen der Drehachse 14 des Lenkrads 12 und der Vertikalen 20 veränderbar ist. So ist in Figur 2 das Lenkrad 12 in einer ersten Position 16 gezeigt, wobei die Drehachse 14 des Lenkrads 12 in der mit dem Bezugszeichen 16 angedeuteten Position des Lenkrads 12 mit dem Bezugszeichen 22 gekennzeichnet ist. Dementsprechend schließt die Drehachse 14 in der Ausrichtung 22 einen relativ kleinen Winkel 24 zur Vertikalen 20 ein. Das Lenkrad 12 ist in Figur 2 in einer zweiten Position 26 gezeigt, die gegenüber der Vertikalen 20 um einen größeren Winkel 28 verschwenkt ist. In dieser Position 26 des Lenkrads 12 weist die Drehachse 14 eine Orientierung auf, die mit dem Bezugszeichen 30 gekennzeichnet ist. Selbstverständlich könnte das Lenkrad 12 in beiden in Figur 2 gezeigten Positionen zusätzlich teleskopiert werden. Die Position 26 des Lenkrads 12 in Figur 2 wird durch ein Teleskopieren und durch ein Verschwenken zu Position 16 des Lenkrads 12 überführt.

Die Vorrichtung 10 umfasst des Weiteren eine lediglich von der Seite gezeigte Anzeigeeinrichtung 32, die in einem Gehäuse 34 integriert ist. Sowohl die Anzeigeeinrichtung 32 als auch das Gehäuse 34 sind in diesem Ausführungsbeispiel in erfindungsgemäßer Weise derart ausgebildet und angeordnet, dass die Anzeigeeinrichtung 32 und das Gehäuse 34 beim Teleskopieren und Verschwenken des Lenkrads 12 in gleicher Weise teleskopiert und verschwenkt wird. Somit bleibt die Relativposition zwischen dem Lenkrad 12 und der Anzeigeeinrichtung 32 bzw. des Gehäuses 34 beim Teleskopieren und/oder Verschwenken des Lenkrads stets gleich.

Das Gehäuse 34 ist mehrteilig ausgebildet, es weist einen oberen Teil 36 und einen unteren Teil 38 auf. Der untere Teil 38 des Gehäuses 34 umschließt mit seinem oberen Bereich den unteren Bereich des oberen Gehäuseteils 36. Das untere Gehäuseteil 38 ist um eine Drehachse drehbar bzw. verschwenkbar angeordnet, wobei die Drehachse durch den Schnittpunkt 40 der in Figur 2 gezeigten Drehachse 14 des Lenkrads 12 in seinen zwei Orientierungen 22, 30 bzw. dem Schnittpunkt der Drehachse 14 des Lenkrads 12 und der Vertikalen 20 verläuft. Demgemäß ist die Drehachse, um die das untere Gehäuseteil 38 verschwenkbar angeordnet, senkrecht zur Zeichenebene angeordnet.

An dem oberen Gehäuseteil 36 sind neben der Anzeigeeinrichtung 32 weitere Bedienelemente angeordnet. Hierbei handelt es sich einerseits um einen Betätigungshebel 42 zum Ansteuern des Scheibenwischers und andererseits um den Fahrtrichtungswechselschalter 44. Das obere Gehäuseteil 36 weist weitere Bedienelemente auf, die jedoch in den Figuren 1 und 2 in der Seitenansicht nicht gezeigt sind. Sowohl das Lenkrad 12, als auch die Anzeigeeinrichtung 32, das obere Gehäuse 36, das untere Gehäuse 38 sind als eine komplett vormontierte Einheit ausgebildet, so dass die gesamte vormontierte Einheit bei der Produktion eines Fahrzeugs komplett an den Bedienerstand des Fahrzeugs montiert wird.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zum Bedienen eines Fahrzeugs, insbesondere eines landwirtschaftlichen oder industriellen Nutzfahrzeugs, mit einem Lenkrad (12), einer Lagereinheit und einer Anzeigeeinrichtung (32), wobei mit der Anzeigeeinrichtung (32) mindestens eine aktuelle Fahrzeugzustandsinformation anzeigbar ist, wobei das Lenkrad (12) in der Lagereinheit drehbar um eine Drehachse (14) gelagert ist, wobei das Lenkrad (12) in seiner Position im Wesentlichen in Richtung der Drehachse (14) verstellbar anordenbar ist, wobei das Lenkrad (12) derart verschwenkbar angeordnet ist, dass der Winkel (28) zwischen der Drehachse (14) des Lenkrads (12) und der Vertikalen (20) veränderbar ist,
**dadurch gekennzeichnet, dass** die Anzeigeeinrichtung (32) derart angeordnet ist, dass bei einem Verstellen der Position des Lenkrads (12) in Richtung seiner Drehachse (14) und/oder bei einem Verschwenken des Lenkrads (12) die Relativposition zwischen Lenkrad (12) und Anzeigeeinrichtung (32) im Wesentlichen gleich bleibt.

2. Vorrichtung nach Anspruch 1, **dadurch gekennzeichnet, dass** die Anzeigeeinrichtung (32) an einem Gehäuse (34) angeordnet ist und dass das Gehäuse (34) mit dem Lenkrad (12) in im Wesentlichen gleicher Weise verstellbar und/oder verschwenkbar angeordnet ist.

3. Vorrichtung nach Anspruch 1 oder 2, **dadurch gekennzeichnet, dass** die Lagereinheit eine Lenksäule aufweist und dass die Anzeigeeinrichtung (32) und/oder das Gehäuse (34) an der Lenksäule befestigt ist.

4. Vorrichtung nach Anspruch 2 oder 3, **dadurch gekennzeichnet, dass** das Gehäuse (34) mehrteilig - vorzugsweise dreiteilig - ausgebildet ist und dass alle Komponenten, insbesondere elektrische und mechanische Komponenten, in dem Gehäuse (34) angeordnet sein können.

5. Vorrichtung nach Anspruch 4, **dadurch gekennzeichnet, dass** die elektrischen Komponenten in einem Gehäuseteil (34) zusammengefasst sind.

6. Vorrichtung nach einem der Ansprüche 1 bis 5, **dadurch gekennzeichnet, dass** das Gehäuse (34) eine Luftleiteinrichtung und/oder mindestens einen Luftauslass aufweist, dass die Luftleiteinrichtung mit einem Luftauslass verbunden sein kann.

7. Vorrichtung nach Anspruch 6, **dadurch gekennzeichnet, dass** mit der Luftleiteinrichtung Luft von der äußeren Umgebung des Fahrzeugs und/oder einer Heizung und/oder einer Klimaanlage zu einem Luftauslass leitbar ist und/oder dass mit der Luftleiteinrichtung mindestens eine Komponente im Gehäuse (34) kühlbar ist und dass über einen Luftauslass Luft einem Bediener zuführbar oder in eine Fahrzeugkabine leitbar sein kann.

8. Vorrichtung nach einem der Ansprüche 1 bis 7, **dadurch gekennzeichnet, dass** die Anzeigeeinrichtung (32) eine Fahrtgeschwindigkeitsanzeige zum Anzeigen der aktuell vorliegenden Fortbewegungsgeschwindigkeit des Fahrzeugs, eine Drehzahlanzeige zum Anzeigen der aktuell vorliegenden Drehzahl des Verbrennungsmotors des Fahrzeugs, eine Tankinhaltsanzeige, ein LCD- oder TFT-Display, mindestens ein Kontrollelement und/oder mindestens ein Alarmsingalelement aufweist.

9. Vorrichtung nach einem der Ansprüche 1 bis 8, **dadurch gekennzeichnet, dass** das Gehäuse (34) mindestens ein Bedienelement (42, 44) aufweist und dass ein Bedienelement beispielsweise einen Fahrtrichtungswechselschalter (44), einen Blinkerhebel, einen Wischerhebel (42), einen Lichtschalter und/oder einen Warnblinkschalter aufweist.

10. Vorrichtung nach einem der Ansprüche 1 bis 9, **gekennzeichnet durch** eine Ausgestaltung im Sinn einer komplett vormontierten Einheit, dass die vormontierte Einheit eine elektrische und/oder eine mechanische Schnittstelle aufweist, dass die Vorrichtung (10) über die elektrische und/oder mechanische Schnittstelle mit dem Fahrzeug verbindbar ist, und dass vorzugsweise die mechanische Schnittstelle einen Befestigungsflansch aufweist, der mittels mindestens einer Schraubverbindung die Lenksäule oder die Lagereinheit mit einem Fahrzeugrahmen oder einer Fahrzeugkabine verbinden kann.
